# FASCICULE DE BREVET EUROPEEN

(11) **EP 3 738 841 B1**
(45) Date de publication et mention de la délivrance du brevet: **25.01.2023**
(21) Numéro de dépôt: 20171650.3
(22) Date de dépôt: 27.04.2020
(51) Int. Cl.: B60S 1/48, B60S 1/56

(54) **SYSTEME DE DISTRIBUTION D'UN FLUIDE POUR VEHICULE, DISTRIBUTEUR FLUIDIQUE ASSOCIE ET PROCEDE D'EJECTION DE FLUIDE UTILISANT UN TEL SYSTEME**
VERTEILUNGSSYSTEM EINES FLUIDS FÜR FAHRZEUG, ENTSPRECHENDER FLUIDVERTEILER UND FLUIDAUSSTOSSVERFAHREN, DAS EIN SOLCHES SYSTEM VERWENDET
SYSTEM FOR DISPENSING A FLUID FOR A VEHICLE, ASSOCIATED FLUID DISPENSER AND METHOD FOR EJECTING FLUID USING SUCH A SYSTEM

(30) Priorité: 17.05.2019 FR 1905176
(43) Date de publication de la demande: 18.11.2020
(73) Titulaire: A. Raymond et Cie, 38000 Grenoble (FR)
(72) Inventeur: GRETHER, Urs, 79539 LOERRACH (DE); BARON, Stéphane, 68510 MAGSTASTT LE BAS (FR)
(74) Mandataire: IP Trust

(56) Documents cités:
- WO-A1-2018/188823
- WO-A1-2019/029915
- DE-A1- 10 342 715

## Description

### DOMAINE DE L'INVENTION

La présente invention concerne un système de distribution d'un fluide, par exemple un produit nettoyant, dans un véhicule automobile.

### ARRIERE PLAN TECHNOLOGIQUE DE L'INVENTION

Avec le développement des véhicules automobiles autonomes, un nombre croissant de caméras et de capteurs est incorporé dans les véhicules pour analyser leur environnement et assister la conduite. Ces caméras et capteurs sont disposés en de multiples points sur le pourtour du véhicule et doivent être régulièrement nettoyés pour garantir la fiabilité de l'assistance. Il est important que l'activation du nettoyage puisse être commandée sur demande et indépendamment pour chaque caméra ou capteur, de manière à ne pas fragiliser l'assistance et à conserver un bon contrôle du véhicule.

On connaît de l'état de la technique, le document WO2018188823 qui propose une ligne de distribution de liquide nettoyant dans un véhicule destinée à alimenter une pluralité de buses d'éjection dudit liquide. La ligne de distribution est équipée d'une pluralité de valves, chacune étant associée à une buse et commandée électriquement dans un état ouvert ou dans un état fermé par une unité de contrôle, de manière à alimenter la buse ou au contraire à bloquer l'alimentation en liquide de ladite buse. Une telle configuration de ligne de distribution permet une alimentation individuelle et indépendante de chaque buse. Par contre, elle nécessite une forte longueur linéaire de ligne de distribution pour acheminer le liquide jusqu'à chaque buse du véhicule.

Pour limiter la longueur de la ligne de distribution, le document WO2019029915 propose une ligne de distribution de liquide unique, positionnée le long de tous les points du véhicule nécessitant une buse d'éjection. Chaque buse comprend des organes de raccordement hydraulique sur la ligne de distribution et un dispositif d'actionnement, tel qu'une électrovanne, commandé électriquement dans un état ouvert ou dans un état fermé de manière à ouvrir ou respectivement fermer la communication fluidique entre la ligne de distribution et la buse. L'inconvénient de cette solution est que chaque buse doit être combinée avec un dispositif d'actionnement, ce qui n'est pas économique. De plus, l'espace occupé par chaque buse est relativement important du fait du dispositif d'actionnement associé.

### OBJET DE L'INVENTION

La présente invention propose une solution alternative aux solutions de l'état de la technique, visant à limiter la longueur de la ligne de distribution de fluide et à simplifier l'actionnement de dispositifs d'éjection de fluide et l'espace qu'ils occupent. Elle concerne en particulier un système de distribution d'un fluide pour véhicule dont l'architecture permet de limiter la longueur de ligne de distribution. Elle concerne également un distributeur qui permet de simplifier l'actionnement et l'encombrement des dispositifs d'éjection ; le système de distribution peut être équipé d'une pluralité de ces distributeurs fluidiques. L'invention concerne enfin un procédé d'éjection d'un fluide utilisant un tel système de distribution.

### BREVE DESCRIPTION DE L'INVENTION

L'invention concerne un système de distribution d'un fluide dans un véhicule comprenant :
- une pluralité n de dispositifs d'éjection du fluide, indépendants ;
- une pluralité n-1 de distributeurs, chacun présentant une entrée, une première sortie et une deuxième sortie, et étant configuré pour établir une connexion fluidique soit entre l'entrée et la première sortie, soit entre l'entrée et la deuxième sortie, respectivement dans un état initial et dans un état commuté ;

Dans le système de distribution selon l'invention, l'entrée d'un premier distributeur est connectée à une pompe reliée à un réservoir de fluide ; chaque dispositif d'éjection est connecté à une sortie d'un distributeur ; et au moins une sortie d'un distributeur est connectée à l'entrée d'un distributeur consécutif.

Selon d'autres caractéristiques avantageuses et non limitatives de l'invention, prises seules ou selon toute combinaison techniquement réalisable :
- Le système de distribution comprend :
   o un conduit principal d'amenée de fluide pour connecter l'entrée du premier distributeur à la pompe,
   o un conduit de sortie pour connecter chaque dispositif d'éjection à une sortie d'un distributeur,
   o au moins un conduit intermédiaire pour connecter au moins une sortie d'un distributeur à l'entrée d'un distributeur consécutif ;
- chaque distributeur comprend un connecteur électrique pour commander son état commuté, et est configuré pour basculer automatiquement de son état commuté à son état initial, sans commande électrique, lorsque la pression de fluide dans le système de distribution est inférieure à une pression déterminée ;
- chaque distributeur comprend un actionneur électromagnétique raccordé au connecteur électrique et comportant un piston mobile apte à se déplacer entre une position initiale et une position commutée, correspondant respectivement à l'état initial et à l'état commuté du distributeur ;
- chaque distributeur comprend un élément de rappel pour ramener le piston dans sa position initiale lorsque l'actionneur est inactif et lorsque la pression du fluide dans le système de distribution est inférieure à la pression déterminée ;
- chaque distributeur comprend :
   o une première voie de communication fluidique entre l'entrée et la première sortie et une deuxième voie de communication fluidique entre l'entrée et la deuxième sortie ;
   o un premier diaphragme déformable dont une face est en contact avec une première extrémité du piston et dont l'autre face est destinée à être en contact avec le fluide, configuré pour obturer la première voie lorsque le piston est dans sa position commutée, la première voie étant ouverte lorsque le piston est dans sa position initiale ;
   o un deuxième diaphragme déformable dont une face est en contact avec une deuxième extrémité du piston et dont l'autre face est destinée à être en contact avec le fluide, configuré pour obturer la deuxième voie lorsque le piston est dans sa position initiale, la deuxième voie étant ouverte lorsque le piston est dans sa position commutée ;
- la surface de contact avec le fluide du premier diaphragme est inférieure à celle du deuxième diaphragme lorsque le piston est en position commutée, et la surface de contact avec le fluide du deuxième diaphragme est inférieure à celle du premier diaphragme lorsque le piston est en position initiale ;
- les premier et deuxième diaphragmes assurent l'étanchéité respectivement entre un corps central du distributeur et la première voie de communication fluidique, et entre le corps central et la deuxième voie de communication fluidique ;
- chaque distributeur comprend :
   o le corps central dans lequel sont disposés le connecteur électrique et l'actionneur,
   o un premier corps comprenant la première sortie et tout ou partie de la première voie de communication fluidique,
   o un deuxième corps comprenant la deuxième sortie et tout ou partie de la deuxième voie de communication fluidique, l'entrée du distributeur étant comprise dans le premier corps, dans le deuxième corps ou dans le corps central ;
- le premier et le deuxième corps sont identiques ;
- le corps central, le premier corps et le deuxième corps sont en matière plastique moulée ;
- l'entrée et les deux sorties de chaque distributeur présentent chacune un embout de connexion fluidique rapide, de type mâle ou femelle ;
- la pression déterminée est comprise entre 1 bar et 15 bars ;
- les dispositifs d'éjection sont des buses à jet, des buses télescopiques ou des buses oscillantes.

L'invention concerne également un procédé d'éjection d'un fluide au niveau d'un dispositif d'éjection, utilisant le système de distribution de fluide précité. Le procédé comprend les étapes suivantes :
- activer un actionneur d'au moins un distributeur pour commander ce dernier dans son état commuté, de manière à mettre en communication fluidique le conduit principal d'amenée de fluide et le dispositif d'éjection ;
- actionner la pompe pour mettre le fluide sous pression dans le système et l'éjecter par ledit dispositif d'éjection ;
- désactiver l'actionneur, alors que l'éjection du fluide s'opère.

Avantageusement, le procédé d'éjection d'un fluide au niveau d'un dispositif d'éjection comprend en outre l'étape suivante : - arrêter la pompe pour que la pression du fluide dans le système de distribution soit inférieure à une pression déterminée, pour arrêter l'éjection de fluide au niveau du dispositif d'éjection et pour ramener chaque distributeur de la pluralité n-1 de distributeurs dans son état initial.

### BREVE DESCRIPTION DES FIGURES

D'autres caractéristiques et avantages de l'invention ressortiront de la description détaillée de l'invention qui va suivre en référence aux figures annexées sur lesquelles :
[Fig. 1a]
   [Fig. 1b] Les figures 1a et 1b présentent deux illustrations schématiques de systèmes de distribution d'un fluide, conformes à la présente invention, incluant une pluralité de distributeurs fluidiques ;
[Fig. 2] La figure 2 présente un mode de réalisation avantageux d'un distributeur fluidique pour un système de distribution de fluide conforme à la présente invention ;
[Fig. 3a]
[Fig. 3b]

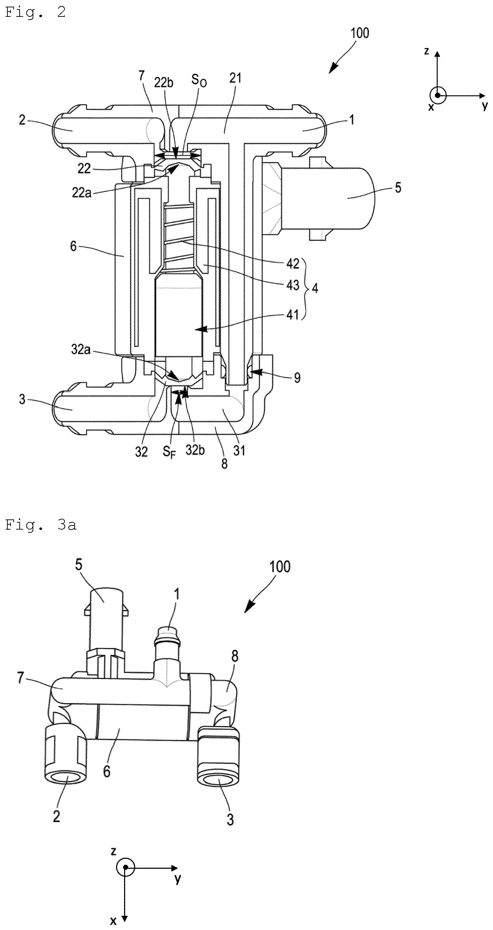

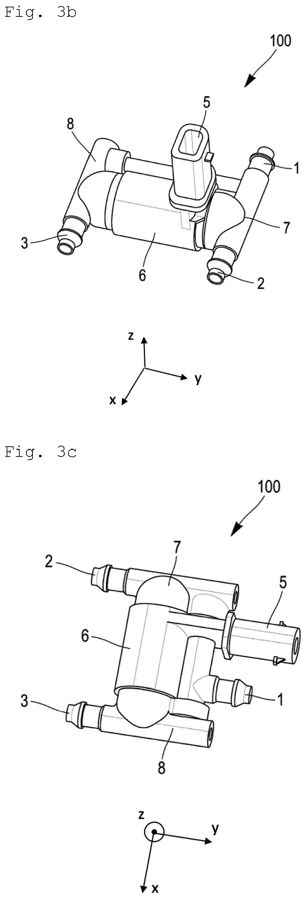

[Fig. 3c] Les figures 3a, 3b et 3c présentent différents modes de réalisation d'un distributeur fluidique conforme à l'invention ;

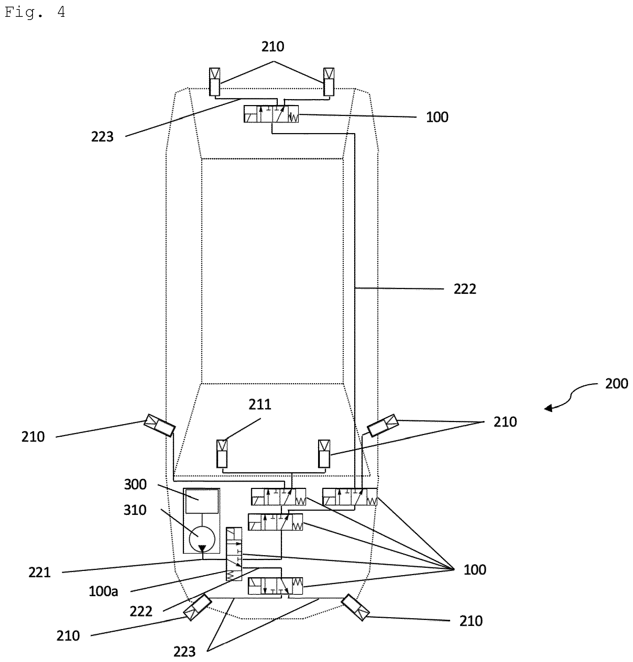

[Fig. 4] La figure 4 présente une illustration schématique d'un système de distribution d'un fluide dans un véhicule, conforme à la présente invention.

### DESCRIPTION DETAILLEE DE L'INVENTION

Dans la partie descriptive, les mêmes références sur les figures pourront être utilisées pour des éléments de même type. Les figures sont des représentations schématiques qui, dans un objectif de lisibilité, ne sont pas nécessairement à l'échelle.

La présente invention concerne un système de distribution 200 d'un fluide, particulièrement adapté à un véhicule.

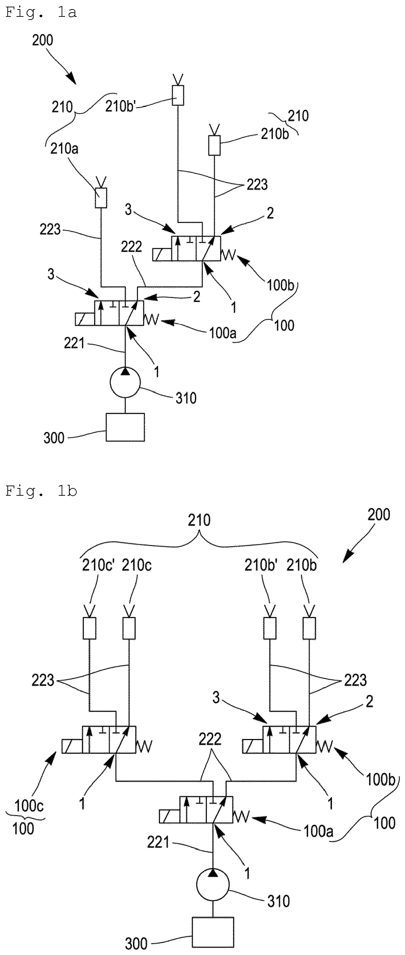

Le système de distribution 200 comprend une pluralité n de dispositifs d'éjection 210 du fluide indépendants (figures 1a, 1b). Par dispositif d'éjection de fluide, on entend tout type de dispositif par lequel le fluide est susceptible de sortir. Le caractère indépendant de chaque dispositif 210 correspond au fait que l'on peut commander l'éjection de fluide par ce dispositif 210, indépendamment des autres. Comme évoqué en introduction, chacun de ces dispositif 210 vise par exemple à nettoyer la surface extérieure d'un capteur, dont la mesure est utilisée pour assister la conduite du véhicule.

Les dispositifs d'éjection 210 pourront par exemple être des buses à jet, des buses télescopiques ou des buses oscillantes. Notons que chaque dispositif d'éjection sera avantageusement muni d'une valve, par exemple formée d'une membrane silicone, apte à se déformer pour laisser passer le fluide sous pression et à se rétracter pour fermer le dispositif lorsque le fluide n'est pas sous pression dans le système de distribution 200.

Le système de distribution 200 comprend également une pluralité n-1 de distributeurs fluidiques 100. Chaque distributeur 100 présente une entrée 1, une première sortie 2 et une deuxième sortie 3 et est susceptible d'être dans deux états distincts : un état dit initial et un état dit commuté. Sa dénomination de distributeur vient du fait qu'il est configuré pour établir une connexion fluidique soit entre l'entrée 1 et la première sortie 2, soit entre l'entrée 1 et la deuxième sortie 3, respectivement dans son état initial et dans son état commuté.

Le système de distribution 200 comprend enfin des moyens d'amenée du fluide pour connecter un réservoir 300 de fluide aux n dispositifs d'éjection, par l'intermédiaire des n-1 distributeurs fluidiques 100.

Comme illustré sur les figures 1a et 1b, le système de distribution 200 comprend un premier distributeur 100a, faisant partie de la pluralité n-1 des distributeurs 100, dont l'entrée 1 est destinée à être connectée, via un conduit principal d'amenée 221, à une pompe 310 laquelle est reliée à un réservoir 300 de fluide. Avantageusement, le conduit principal d'amenée 221 fait partie du système de distribution 200.

Le système de distribution 200 comprend également une pluralité de conduits de sortie 223 de fluide pour connecter chaque dispositif d'éjection 210 à une sortie 2,3 d'un distributeur 100. Il comprend en outre au moins un conduit intermédiaire 222 pour connecter au moins une sortie 2,3 d'un distributeur 100a et l'entrée 1 d'un distributeur consécutif 100b,100c. Dans l'exemple de la figure 1b, le système de distribution 200 comprend quatre dispositifs d'éjection 210, quatre conduits de sortie 223, trois distributeurs 100 et deux conduits intermédiaires 222.

Le système de distribution 200 selon l'invention met en oeuvre n-1 distributeurs 100 pour n dispositifs d'éjection 210. Les distributeurs 100 ne sont pas nécessairement accolés aux dispositifs d'éjection 210, ce qui permet de limiter l'encombrement desdits dispositifs 210.

Le conduit principal d'amenée 221, la pluralité de conduits de sortie 223 et le au moins un conduit intermédiaire 222 forment une ligne de distribution du fluide.

Le conduit principal d'amenée 221 et le au moins un conduit intermédiaire 222 forment avantageusement le « squelette » de la ligne de distribution, par exemple s'étendant sur le pourtour du véhicule de manière à acheminer le fluide vers chacun des points requis d'éjection de fluide. Les conduits de sortie 223 forment les ramifications alimentant chaque dispositif d'éjection de fluide 210. Le système de distribution 200 selon l'invention permet ainsi de réduire la longueur de ligne de distribution. Dans l'exemple illustré sur la figure 4, le système de distribution 200 comprend six distributeurs 100, sept dispositifs d'éjection 210 indépendants et un dispositif d'éjection 211 dépendant ; l'éjection de fluide au niveau du dispositif d'éjection dépendant 211 sera simultanée avec celle de l'un des dispositifs 210 indépendants, les deux dispositifs 210,211 étant reliés à la même sortie 2 d'un distributeur 100.

La présente invention concerne également un mode de réalisation avantageux d'un distributeur fluidique 100 adapté pour le système de distribution 200 précité.

Comme représenté sur la figure 2, le distributeur fluidique 100 comprend une première voie de communication fluidique 21 reliant la première sortie 2 et l'entrée 1. Il comprend également une deuxième voie de communication fluidique 31 reliant la deuxième sortie 3 et l'entrée 1.

Le distributeur fluidique 100 comprend en outre un actionneur 4 incluant un piston mobile 41 apte à se déplacer entre une position initiale (qui correspond à l'état initial du distributeur 100) et une position commutée (qui correspond à l'état commuté du distributeur 100).

Le distributeur fluidique 100 comprend enfin deux diaphragmes 22,32 déformables disposés de part et d'autre du piston mobile 41. Sans que cela soit limitatif, les diaphragmes 22,32 pourront être formés en un matériau de la famille des élastomères, par exemple en EPDM (Ethylène Propylène Diène Monomère) ou en EPDM renforcé avec des fibres de verre ou encore en silicone EPDM. Un premier diaphragme 22 présente une face 22a en contact avec une première extrémité du piston 41 et une autre face 22b destinée à être en contact avec le fluide. Le premier diaphragme 22 est configuré pour obturer la première voie de communication fluidique 21 lorsque le piston 41 est dans sa position commutée et pour autoriser une communication fluidique entre l'entrée 1 et la première sortie 2, via la première voie 21 lorsque le piston 41 est dans sa position initiale.

Un deuxième diaphragme 32 présente une face 32a en contact avec une deuxième extrémité du piston 41 et une autre face 32b destinée à être est en contact avec le fluide. Le deuxième diaphragme 32 est configuré pour obturer la deuxième voie de communication fluidique 31 lorsque le piston 41 est dans sa position initiale, et pour autoriser une communication fluidique entre l'entrée 1 et la deuxième sortie 3, via la deuxième voie 31 lorsque le piston 41 est dans sa position commutée.

On comprend ainsi que, lorsque le distributeur 100 est dans son état initial, le piston 41 de l'actionneur 4 étant dans sa position initiale, le fluide peut transiter de l'entrée 1 jusqu'à la première sortie 2 à travers la première voie de communication fluidique 21, mais ne peut pas atteindre la deuxième sortie 3 ; et lorsque le distributeur 100 est dans son état commuté, le piston 41 étant dans sa position commutée, le fluide peut transiter de l'entrée 1 jusqu'à la deuxième sortie 3 à travers la deuxième voie de communication fluidique 31, mais ne peut pas atteindre la première sortie 2.

De manière avantageuse, la surface de contact Sf avec le fluide du deuxième diaphragme 32 est inférieure à la surface de contact Sₒ du premier diaphragme 22, lorsque le piston 41 est en position initiale (comme par exemple illustré sur la figure 2). Corrélativement, la surface de contact avec le fluide du premier diaphragme 22 est inférieure à celle du deuxième diaphragme 32, lorsque le piston 41 est en position commutée.

Pour cela, l'exemple de distributeur 100 présenté en figure 2 propose une configuration particulière des voies de communication fluidique 21,31. Nous décrirons ici la configuration de la première voie 21, laquelle configuration s'applique de manière identique à la deuxième voie 31. La première voie 21 comprend :
- un tronçon amont, établissant la communication fluidique depuis l'entrée 1 jusqu'à un logement intermédiaire dans lequel est disposé le diaphragme 22 mobile,
- un tronçon aval, établissant la communication fluidique depuis le logement intermédiaire jusqu'à la première sortie 2,
- le logement intermédiaire dont la section dans le plan (x,y) (selon le repère (x,y,z) utilisé sur la figure 2) est supérieure aux sections, dans ce même plan, des tronçons amont et aval débouchant dans ledit logement intermédiaire.

Au niveau de son extrémité débouchant dans le logement intermédiaire, le tronçon amont forme un conduit dont l'axe central est sensiblement aligné avec le centre du premier diaphragme 22 et sensiblement normal à la face 22b dudit diaphragme 22. Le tronçon aval forme un conduit, au niveau de son extrémité débouchant dans le logement intermédiaire, décalé par rapport au centre du premier diaphragme 22 et sensiblement normal à la face 22b dudit diaphragme 22 (figure 2).

Lorsque le distributeur 100 est dans son état initial (correspondant à la position initiale du piston 41 de l'actionneur 4), le premier diaphragme 22 est « au repos », non déformé car il n'est pas poussé par le piston 41 : il autorise donc le fluide à transiter depuis le tronçon amont, dans le logement intermédiaire et dans le tronçon aval de la première voie 21. La communication fluidique est ainsi établie depuis l'entrée 1 jusqu'à la première sortie 2 via la première voie de communication fluidique 21. La surface So de la face 22b du premier diaphragme 22 en contact avec le fluide est typiquement égale à la section, dans le plan (x,y), du logement intermédiaire. Parallèlement, le deuxième diaphragme 32 est poussé et déformé par le piston 41 : il est ainsi plaqué contre l'extrémité du tronçon amont (de la deuxième voie 31) débouchant dans le logement intermédiaire (de la deuxième voie 31) et obture la communication fluidique entre ledit tronçon amont et ledit logement intermédiaire (figure 2) ; en d'autres termes, il obture la deuxième voie 31 et coupe la communication fluidique entre l'entrée 1 et la deuxième sortie 3. Dans l'état initial, la surface Sf de la face 32b du deuxième diaphragme 32 en contact avec le fluide est typiquement égale à la section, dans le plan (x,y), du conduit à l'extrémité débouchant dans le logement intermédiaire du tronçon amont de la deuxième voie 31. Comme énoncé précédemment, lorsque le distributeur 100 est dans son état initial, la surface Sₒ en contact avec le fluide de la face 22b du premier diaphragme 22 est plus grande que la surface S_{f} en contact avec le fluide de la face 32b du deuxième diaphragme 32.

Lorsque le distributeur 100 est dans son état commuté (correspondant à la position commutée du piston 41), le premier diaphragme 22 est poussé et déformé par le piston 41, et vient se plaquer contre l'extrémité du tronçon amont (de la première voie 21) débouchant dans le logement intermédiaire (de la première voie 21) et ainsi obturer la communication fluidique entre ledit tronçon amont et ledit logement intermédiaire ; en d'autres termes, il obture la première voie 21 et coupe la communication fluidique entre l'entrée 1 et la première sortie 2. Dans cet état commuté, la surface de la face 22b du premier diaphragme 22 en contact avec le fluide est typiquement égale à la section, dans le plan (x,y), du conduit à l'extrémité débouchant dans le logement intermédiaire du tronçon amont de la première voie 21. Parallèlement, le deuxième diaphragme 32 est « au repos », non déformé car il n'est pas poussé par le piston 41 : il laisse donc le fluide transiter depuis le tronçon amont, dans le logement intermédiaire et dans le tronçon aval (de la deuxième voie 31). La communication fluidique est ainsi établie depuis l'entrée 1 jusqu'à la deuxième sortie 3 via la deuxième voie de communication fluidique 31.

Comme énoncé précédemment, lorsque le distributeur 100 est dans son état commuté, la surface en contact avec le fluide de la face 22b du premier diaphragme 22 est plus petite que la surface en contact avec le fluide de la face 32b du deuxième diaphragme 32.

De manière avantageuse, l'actionneur 4 est raccordé à un connecteur électrique 5 inclus dans le distributeur 100. Lorsqu'il est alimenté électriquement ou autrement dit lorsqu'il est activé, l'actionneur 4 permet de commander le déplacement du piston 41 mobile dans sa position commutée.

Préférentiellement, l'actionneur 4 est un actionneur électromagnétique comprenant une bobine 43 disposée autour du piston 41 : le champ magnétique qui s'établit lorsque l'actionneur 4 est alimenté électriquement génère le mouvement du piston 41 dans sa position commutée.

Notons que d'autres types d'actionneurs pourraient être utilisés comme par exemple des actionneurs à moteur linéaire. L'avantage d'un actionneur électromagnétique par rapport aux autres types d'actionneurs est qu'il constitue une solution simple et économique.

Dans l'exemple de distributeur 100 de la figure 2, la position commutée du piston 41 (non représentée) est celle dans laquelle il vient pousser et déformer le premier diaphragme 22, de manière à obturer la première voie de communication 21.

Lorsque le distributeur 100 est dans son état commuté et que le fluide arrive sous pression à l'entrée 1 du distributeur 100, la force appliquée par le fluide sur la face 32b du deuxième diaphragme 32 est supérieure à la force appliquée sur la face 22b du premier diaphragme 22, car la surface en contact avec le fluide de la face 32b est supérieure à la surface en contact avec le fluide de la face 22b. Il est ainsi possible de désactiver l'actionneur 4 dès que la pression de fluide est établie à l'entrée du distributeur 100, la différence de surface en contact avec le fluide entre les deux diaphragmes 22,32 étant apte à maintenir le piston 41 dans sa position commutée (et donc à maintenir le distributeur 100 dans son état commuté). Cela procure une solution simple et économique pour l'actionnement du distributeur 100, ne sollicitant qu'une activation ponctuelle de l'actionneur 4.

De manière également avantageuse, le distributeur fluidique 100 comprend un élément de rappel 42, tel que par exemple un ressort, pour ramener le piston 41 dans sa position initiale lorsque l'actionneur 4 est inactif et lorsque la pression du fluide à l'entrée du distributeur 100 est inférieure à une pression déterminée. Comme évoqué précédemment, quand l'actionneur 4 est inactif et que la pression de fluide est établie à l'entrée 1 du distributeur 100, la différence de surface en contact avec le fluide entre les deux diaphragmes 22,32 permet de maintenir le piston 41 dans son état commuté. Par pression de fluide établie, on entend une pression de fluide supérieure à une pression déterminée, qui pourra par exemple être comprise entre 1 bar et 15 bars.

En dessous de cette pression déterminée, la force appliquée par le fluide sur le premier diaphragme 22 ne va plus être suffisante pour contrecarrer la somme de la force appliquée par le fluide sur le deuxième diaphragme 32 et de la force de l'élément de rappel 42. Ainsi, lorsque la pression de fluide est inférieure à la pression déterminée, le piston 41 revient dans sa position initiale (correspondant à l'état initial du distributeur 100) : dans l'exemple de distributeur 100 de la figure 2, la position initiale du piston 41 (illustrée) est celle dans laquelle il vient pousser et déformer le deuxième diaphragme 32, de manière à obturer la deuxième voie de communication 31, alors que le premier diaphragme 22 est « au repos », non déformé, autorisant la communication fluidique dans la première voie 21.

Quand le distributeur 100 est dans son état initial, si la pression du fluide est établie au-delà de la pression déterminée, le distributeur 100 demeure naturellement dans son état initial du fait de la différence de surface en contact avec le fluide des deux diaphragmes 22, 32 : le fluide transite ainsi dans la première voie 21, entre l'entrée 1 et la première sortie 2 du distributeur 100.

Le distributeur fluidique 100 tel que décrit propose ainsi une solution simple et économique d'actionnement entre l'état initial et commuté et vice-versa. L'actionneur 4 est ponctuellement activé pour basculer dans l'état commuté, lequel état peut ensuite être maintenu, sans alimentation électrique, par la pression du fluide établie à l'entrée 1 du distributeur 100 au-delà d'une pression déterminée. Le retour à l'état initial peut être opéré par réduction de la pression de fluide en dessous d'une pression déterminée.

Avantageusement, le premier diaphragme 22 assure l'étanchéité entre un corps central 6 du distributeur 100 et la première voie de communication fluidique 21 ; et le deuxième diaphragme 32 assure l'étanchéité entre le corps central 6 et la deuxième voie de communication fluidique 31. En particulier, la périphérie de chaque diaphragme 22,32 est configurée pour constituer un joint d'étanchéité fixe entre le corps central 6 et, respectivement, la première 21 et la deuxième 31 voies de communication fluidique. Le corps central 6 contient préférentiellement l'actionneur 4 et le connecteur électrique 5.

La configuration des diaphragmes 22,32 permet de garantir que le fluide n'atteint pas les composants de l'actionneur 4, et ce, sans joint d'étanchéité mobile. La fiabilité et la durée de vie de l'actionneur 4 est ainsi grandement augmentée.

De manière avantageuse, le distributeur 100 est formé de trois corps 6,7,8 distincts (figure 2, 3a, 3b, 3c). Le corps central 6 est disposé en partie centrale du distributeur 100 et abrite l'actionneur 4 et le connecteur électrique 5. Un premier corps 7 comprend la première sortie 2 et tout ou partie de la première voie de communication fluidique 21. Un deuxième corps 8 comprend la deuxième sortie 3 et tout ou partie de la deuxième voie de communication fluidique 31. L'entrée 1 du distributeur 100 peut être comprise dans le premier corps 7 (figures 2, 3a, 3b), dans le deuxième corps 8 ou dans le corps central 6 (figure 3c). Dans ce dernier cas de figure, l'entrée 1 de fluide et les parties des première et deuxième voies de communication fluidique comprises dans le corps central 6 sont bien-sûr isolées de la zone du corps central 6 abritant l'actionneur 4 et le connecteur électrique 5. Au moins un joint 9 est utilisé pour assurer l'étanchéité du raccordement d'une voie de communication fluidique (par exemple, la deuxième voie 31, comme illustré sur la figure 2), entre le premier corps 7 et le deuxième corps 8. Préférentiellement, les trois corps sont formés par moulage d'une matière plastique, choisie par exemple parmi les polyamides (PA66, PA12,...), le polyoxyméthylène (POM), les polyesters (polytéréphtalate de butylène (PBT),...), etc.

L'entrée 1 et les deux sorties 2,3 du distributeur 100 présentent chacune un axe central.

Selon une première option de réalisation, les axes centraux des deux sorties 2,3 sont disposés dans un même plan (x,y) et l'axe central de l'entrée 1 est disposé dans un plan différent parallèle, comme illustré sur la figure 3a. Le connecteur électrique 5 peut être disposé dans le même plan (x,y) que les axes centraux des sorties 2,3, ou dans un plan différent, parallèle ou orthogonal.

Selon une autre option de réalisation du distributeur 100, les axes centraux de l'entrée 1 et des deux sorties 2,3 sont disposés dans un même plan (x,y), comme illustré sur les figures 2, 3b, 3c. Le connecteur électrique 5 peut être disposé dans le même plan (x,y) que les axes centraux des entrée 1 et sorties 2,3 (figure 3c), ou dans un plan différent, par exemple un plan orthogonal (x,z) (figure 3b).

Selon encore une autre option de réalisation du distributeur 100, le premier corps 7 et le deuxième corps 8 sont identiques (figure 3c). Avantageusement, dans ce mode de réalisation, le corps central 6 inclut l'entrée 1 du distributeur et une partie des première 21 et deuxième 31 voies de communication fluidique.

Dans l'une ou l'autre des options de réalisation décrites ci-dessus, l'entrée 1 et les deux sorties 2,3 du distributeur 100 présentent avantageusement chacune un embout de connexion fluidique rapide, de type mâle ou de type femelle, de manière à faciliter leur connexion à un système de distribution de fluide. Le choix de l'une ou l'autre des options de réalisation pour les distributeurs 100 qui seront incorporés dans le système de distribution de fluide 200 dépend de l'espace disponible pour chaque distributeur et/ou des orientations et dispositions des conduits fluidiques ou fils électriques à raccorder audit distributeur pour former le système de distribution 200.

L'invention concerne enfin un procédé d'éjection d'un fluide au niveau d'un dispositif d'éjection 210, utilisant le système de distribution de fluide 200 précédemment décrit.

Lorsqu'il est nécessaire d'éjecter du fluide, par exemple au niveau d'un dispositif 210c' illustré sur la figure 1b, le procédé d'éjection comprend une première étape d'activation de l'actionneur 4 du premier distributeur 100a et de l'actionneur 4 d'un deuxième distributeur 100c adjacent, pour commander lesdits distributeurs 100a,100c dans leur état commuté. Dans son état commuté, le premier distributeur 100a va établir une connexion fluidique entre son entrée 1 et sa deuxième sortie 3 ; et dans son état commuté, le distributeur 100c adjacent va établir une connexion fluidique entre son entrée 1 et sa deuxième sortie 3. Ainsi, le système de distribution 200 est dans une configuration permettant une communication fluidique entre le conduit principal d'amenée de fluide 221 et le dispositif d'éjection 210c'.

Le procédé d'éjection selon l'invention comprend ensuite une deuxième étape d'actionnement de la pompe 310 pour mettre le fluide sous pression dans la ligne de distribution 221,222,223 et à l'éjecter par ledit dispositif 210. Comme énoncé précédemment, la pression du fluide est supérieure à une pression déterminée.

Le procédé d'éjection comprend enfin une troisième étape de désactivation de l'actionneur 4, alors que l'éjection du fluide s'opère. Comme énoncé précédemment, il n'est pas nécessaire de maintenir l'actionneur 4 actif car dès l'instant où la pression de fluide est au-delà de la pression déterminée, le distributeur 100 est configuré pour demeurer dans l'état commuté.

Pour arrêter l'éjection de fluide au niveau du dispositif 210c' et pour ramener les distributeurs 100a et 100c dans leur état initial, le procédé d'éjection comprend en outre une quatrième étape d'arrêt de la pompe 310 pour que la pression du fluide dans la ligne de distribution 221,222,223 soit inférieure à la pression déterminée. Les distributeurs 100a,100c reviennent alors dans leur état initial.

Ce même procédé peut ensuite être mis en oeuvre pour éjecter du fluide au niveau d'un autre dispositif 210c, 210b', 210b parmi la pluralité n de dispositifs d'éjection 210.

La commande des actionneurs 4 de la pluralité n-1 de distributeurs 100 et la commande de la pompe peut être opérée par l'ordinateur de bord.

Le distributeur 100, le système de distribution de fluide 200 et le procédé d'éjection selon l'invention peuvent être avantageusement utilisés dans un véhicule pour distribuer et alimenter des dispositifs d'éjection de liquide de nettoyage par exemple.

Ils peuvent également être utilisés pour la distribution d'autres types de fluides, par exemple de l'air, de l'essence ou de l'huile, dans d'autres systèmes par exemple du domaine automobile.

Bien entendu, l'invention n'est pas limitée aux modes de mise en oeuvre et exemples décrits, et on peut y apporter des variantes de réalisation sans sortir du cadre de l'invention tel que défini par les revendications.

## Revendications

1. Système de distribution (200) d'un fluide dans un véhicule comprenant :
- une pluralité n de dispositifs d'éjection (210) du fluide indépendants ;
- une pluralité n-1 de distributeurs (100), chacun présentant une entrée (1), une première sortie (2) et une deuxième sortie (3), et étant configuré pour établir une connexion fluidique soit entre l'entrée (1) et la première sortie (2), soit entre l'entrée (1) et la deuxième sortie (3), respectivement dans un état initial et dans un état commuté ;
l'entrée d'un premier distributeur (100a) étant connectée à une pompe (310) reliée à un réservoir (300) de fluide ; chaque dispositif d'éjection (210) étant connecté à une sortie (2,3) d'un distributeur (100) ; au moins une sortie (2,3) d'un distributeur (100) étant connectée à l'entrée (1) d'un distributeur consécutif (100).

2. Système de distribution (200) d'un fluide selon la revendication précédente, comprenant :
- un conduit principal d'amenée (221) de fluide pour connecter l'entrée du premier distributeur (100a) à la pompe (310),
- un conduit de sortie (223) pour connecter chaque dispositif d'éjection (210) à une sortie (2,3) d'un distributeur (100),
- au moins un conduit intermédiaire (222) pour connecter au moins une sortie (2,3) d'un distributeur (100) à l'entrée (1) d'un distributeur (100) consécutif.

3. Système de distribution (200) d'un fluide selon l'une des revendications précédentes, dans lequel chaque distributeur (100) comprend un connecteur électrique (5) pour commander son état commuté, et est configuré pour basculer automatiquement de son état commuté à son état initial, sans commande électrique, lorsque la pression de fluide dans le système de distribution (200) est inférieure à une pression déterminée.

4. Système de distribution (200) d'un fluide selon la revendication précédente, dans lequel chaque distributeur (100) comprend un actionneur électromagnétique (4) raccordé au connecteur électrique (5) et comportant un piston (41) mobile apte à se déplacer entre une position initiale et une position commutée, correspondant respectivement à l'état initial et à l'état commuté du distributeur (100).

5. Système de distribution (200) d'un fluide selon la revendication précédente, dans lequel chaque distributeur (100) comprend un élément de rappel (42) pour ramener le piston dans sa position initiale lorsque l'actionneur (4) est inactif et lorsque la pression du fluide dans le système de distribution (200) est inférieure à la pression déterminée.

6. Système de distribution (200) d'un fluide selon l'une des deux revendications précédentes, dans lequel chaque distributeur (100) comprend :
- une première voie de communication fluidique (21) entre l'entrée (1) et la première sortie (2) et une deuxième voie de communication fluidique (31) entre l'entrée (1) et la deuxième sortie (3) ;
- un premier diaphragme (22) déformable dont une face (22a) est en contact avec une première extrémité du piston (41) et dont l'autre face (22b) est destinée à être en contact avec le fluide, configuré pour obturer la première voie (21) lorsque le piston (41) est dans sa position commutée, la première voie (21) étant ouverte lorsque le piston (41) est dans sa position initiale ;
- un deuxième diaphragme (32) déformable dont une face (32a) est en contact avec une deuxième extrémité du piston (41) et dont l'autre face (32b) est destinée à être en contact avec le fluide, configuré pour obturer la deuxième voie (31) lorsque le piston (41) est dans sa position initiale, la deuxième voie (31) étant ouverte lorsque le piston (41) est dans sa position commutée.

7. Système de distribution (200) d'un fluide selon la revendication précédente, dans lequel la surface de contact avec le fluide du premier diaphragme (22) est inférieure à celle du deuxième diaphragme (32) lorsque le piston (41) est en position commutée, et la surface de contact avec le fluide du deuxième diaphragme (32) est inférieure à celle du premier diaphragme (22) lorsque le piston (41) est en position initiale.

8. Système de distribution (200) d'un fluide selon l'une des deux revendications précédentes, dans lequel les premier (22) et deuxième (32) diaphragmes assurent l'étanchéité respectivement entre un corps central (6) du distributeur (100) et la première voie de communication fluidique (21), et entre le corps central (6) et la deuxième voie de communication fluidique (31).

9. Système de distribution (200) d'un fluide selon la revendication précédente, dans lequel chaque distributeur (100) comprend :
- le corps central (6) dans lequel sont disposés le connecteur électrique (5) et l'actionneur (4),
- un premier corps (7) comprenant la première sortie (2) et tout ou partie de la première voie de communication fluidique (21),
- un deuxième corps (8) comprenant la deuxième sortie (3) et tout ou partie de la deuxième voie de communication fluidique (31),
l'entrée (1) du distributeur (100) étant comprise dans le premier corps (7), dans le deuxième corps (8) ou dans le corps central (6).

10. Système de distribution (200) d'un fluide selon la revendication précédente, dans lequel le premier (7) et le deuxième (8) corps sont identiques.

11. Système de distribution (200) d'un fluide selon l'une des deux revendications précédentes, dans lequel le corps central (6), le premier corps (7) et le deuxième corps (8) sont en matière plastique moulée.

12. Système de distribution (200) d'un fluide selon l'une des revendications précédentes, dans lequel l'entrée (1) et les deux sorties (2,3) de chaque distributeur (100) présentent chacune un embout de connexion fluidique rapide, de type mâle ou femelle.

13. Système de distribution (200) d'un fluide selon l'une des revendications 3 à 12, dans lequel la pression déterminée est comprise entre 1 bar et 15 bars.

14. Système de distribution (200) d'un fluide selon l'une des revendications précédentes, dans lequel les dispositifs d'éjection (210) sont des buses à jet, des buses télescopiques ou des buses oscillantes.

15. Procédé d'éjection d'un fluide au niveau d'un dispositif d'éjection (210), utilisant le système de distribution de fluide (200) conforme à l'une des revendications 2 à 14, comprenant les étapes suivantes :
- activer un actionneur (4) d'au moins un distributeur (100) pour commander ce dernier dans son état commuté, de manière à mettre en communication fluidique le conduit principal d'amenée (221) de fluide et le dispositif d'éjection (210) ;
- actionner la pompe (310) pour mettre le fluide sous pression dans le système (200) et l'éjecter par ledit dispositif d'éjection (210) ;
- désactiver l'actionneur (4), alors que l'éjection du fluide s'opère.

16. Procédé d'éjection d'un fluide au niveau d'un dispositif d'éjection (210) selon la revendication précédente, comprenant en outre l'étape suivante :
- arrêter la pompe (310) pour que la pression du fluide dans le système de distribution (200) soit inférieure à une pression déterminée, pour arrêter l'éjection de fluide au niveau du dispositif d'éjection (210) et pour ramener chaque distributeur de la pluralité n-1 de distributeurs (100) dans son état initial.

## Patentansprüche

1. System (200) zum Verteilen eines Fluids in einem Fahrzeug, umfassend:
- eine Vielzahl n von unabhängigen Fluidausstoßvorrichtungen (210);
- eine Vielzahl n-1 von Verteilern (100), die jeweils einen Einlass (1), einen ersten Auslass (2) und einen zweiten Auslass (3) vorweisen und zum Herstellen einer Fluidverbindung entweder zwischen dem Einlass (1) und dem ersten Auslass (2), oder zwischen dem Einlass (1) und dem zweiten Auslass (3) konfiguriert sind, jeweils in einem Anfangszustand und in einem Schaltzustand;
wobei der Einlass eines ersten Verteilers (100a) mit einer Pumpe (310) verbunden ist, die an ein Fluidreservoir (300) angeschlossen ist; jede Ausstoßvorrichtung (210) mit einem Auslass (2, 3) eines Verteilers (100) verbunden ist; mindestens ein Auslass (2, 3) eines Verteilers (100) mit dem Einlass (1) eines nachfolgenden Verteilers (100) verbunden ist.

2. Fluidverteilungssystem (200) nach dem vorstehenden Anspruch, umfassend:
- eine Fluidzufuhrhauptleitung (221) zum Verbinden des Einlasses des ersten Verteilers (100a) mit der Pumpe (310),
- eine Auslassleitung (223) zum Verbinden jeder Ausstoßvorrichtung (210) mit einem Auslass (2, 3) eines Verteilers (100),
- mindestens eine Zwischenleitung (222) zum Verbinden mindestens eines Auslasses (2, 3) eines Verteilers (100) mit dem Einlass (1) eines nachfolgenden Verteilers (100).

3. Fluidverteilungssystem (200) nach einem der vorstehenden Ansprüche, wobei jeder Verteiler (100) einen elektrischen Verbinder (5) zum Steuern seines Schaltzustands umfasst und zum automatischen Wechseln von seinem Schaltzustand in seinen Anfangszustand ohne elektrische Steuerung konfiguriert ist, wenn der Fluiddruck in dem Verteilungssystem (200) geringer als ein bestimmter Druck ist.

4. Fluidverteilungssystem (200) nach dem vorstehenden Anspruch, wobei jeder Verteiler (100) ein Magnetstellwerk (4) umfasst, das zu dem elektrischen Verbinder (5) zugeschaltet ist und einen bewegbaren Kolben (41) umfasst, der geeignet ist, um sich zwischen einer Anfangsposition und einer Schaltposition zu verschieben, die jeweils dem Anfangszustand und dem Schaltzustand des Verteilers (100) entspricht.

5. Fluidverteilungssystem (200) nach dem vorstehenden Anspruch, wobei jeder Verteiler (100) ein Rückstellungselement (42) zum Zurückführen des Kolbens in seine Anfangsposition umfasst, wenn das Stellglied (4) inaktiv ist und wenn der Fluiddruck in dem Verteilungssystem (200) geringer als der bestimmte Druck ist.

6. Fluidverteilungssystem (200) nach einem der zwei vorstehenden Ansprüche, wobei jeder Verteiler (100) umfasst:
- einen ersten Fluidkommunikationsweg (21) zwischen dem Einlass (1) und dem ersten Auslass (2) und einen zweiten Fluidkommunikationsweg (31) zwischen dem Einlass (1) und dem zweiten Auslass (3);
- eine erste verformbare Membran (22), deren eine Fläche (22a) in Berührung mit einem ersten Ende des Kolbens (41) steht und deren andere Fläche (22b) dafür bestimmt ist, mit dem Fluid in Berührung zu stehen, die zum Absperren des ersten Wegs (21) konfiguriert ist, wenn der Kolben (41) in seiner Schaltposition ist, wobei der erste Weg (21) offen ist, wenn der Kolben (41) in seiner Anfangsposition ist;
- eine zweite verformbare Membran (32), deren eine Fläche (32a) in Berührung mit einem zweiten Ende des Kolbens (41) steht und deren andere Fläche (32b) dafür bestimmt ist, mit dem Fluid in Berührung zu stehen, die zum Absperren des zweiten Wegs (31) konfiguriert ist, wenn der Kolben (41) in seiner Anfangsposition ist, wobei der zweite Weg (31) offen ist, wenn der Kolben (41) in seiner Schaltposition ist.

7. Fluidverteilungssystem (200) nach dem vorstehenden Anspruch, wobei die Oberfläche der Berührung mit dem Fluid der ersten Membran (22) geringer als die der zweiten Membran (32) ist, wenn der Kolben (41) in der Schaltposition ist, und die Oberfläche der Berührung mit dem Fluid der zweiten Membran (32) geringer als die der ersten Membran (22) ist, wenn der Kolben (41) in der Anfangsposition ist.

8. Fluidverteilungssystem (200) nach einem der zwei vorstehenden Ansprüche, wobei die erste (22) und die zweite (32) Membran jeweils zwischen einem zentralen Körper (6) des Verteilers (100) und dem ersten Fluidkommunikationsweg (21) und zwischen dem zentralen Körper (6) und dem zweiten Fluidkommunikationsweg (31) die Undurchlässigkeit sicherstellen.

9. Fluidverteilungssystem (200) nach dem vorstehenden Anspruch, wobei jeder Verteiler (100) umfasst:
- den zentralen Körper (6), in dem der elektrische Verbinder (5) und das Stellglied (4) angeordnet sind,
- einen ersten Körper (7), umfassend den ersten Auslass (2) und den gesamten oder einen Teil des ersten Fluidkommunikationswegs (21),
- einen zweiten Körper (8), umfassend den zweiten Auslass (3) und den gesamten oder einen Teil des zweiten Fluidkommunikationswegs (31),
wobei der Einlass (1) des Verteilers (100) in dem ersten Körper (7), in dem zweiten Körper (8) oder in dem zentralen Körper (6) enthalten ist.

10. Fluidverteilungssystem (200) nach dem vorstehenden Anspruch, wobei der erste (7) und der zweite (8) Körper identisch sind.

11. Fluidverteilungssystem (200) nach einem der zwei vorstehenden Ansprüche, wobei der zentrale Körper (6), der erste Körper (7) und der zweite Körper (8) aus geformtem Kunststoffmaterial hergestellt sind.

12. Fluidverteilungssystem (200) nach einem der vorstehenden Ansprüche, wobei der Einlass (1) und die zwei Auslässe (2, 3) jedes Verteilers (100) jeweils ein Endstück für die schnelle Fluidverbindung männlicher oder weiblicher Art vorweisen.

13. Fluidverteilungssystem (200) nach einem der Ansprüche 3 bis 12, wobei der bestimmte Druck zwischen 1 bar und 15 bar liegt.

14. Fluidverteilungssystem (200) nach einem der vorstehenden Ansprüche, wobei die Ausstoßvorrichtungen (210) Strahldüsen, Teleskopdüsen oder oszillierende Düsen sind.

15. Verfahren zum Ausstoßen eines Fluids an einer Ausstoßvorrichtung (210) unter Verwendung des Fluidverteilungssystems (200) gemäß einem der Ansprüche 2 bis 14, umfassend die folgenden Schritte:
- Aktivieren eines Stellglieds (4) mindestens eines Verteilers (100) zum Steuern dieses letzteren in seinem Schaltzustand, um die Fluidzufuhrhauptleitung (221) und die Ausstoßvorrichtung (210) in Fluidkommunikation zu bringen;
- Betreiben der Pumpe (310) zum Unterdrucksetzen des Fluids in dem System (200) und zum Ausstoßen davon durch die Ausstoßvorrichtung (210);
- Desaktivieren des Stellglieds (4), während das Ausstoßen des Fluids stattfindet.

16. Verfahren zum Ausstoßen eines Fluids an einer Ausstoßvorrichtung (210) nach dem vorstehenden Anspruch, ferner umfassend den folgenden Schritt:
- Anhalten der Pumpe (310), so dass der Druck des Fluids in dem Verteilungssystem (200) geringer als ein bestimmter Druck ist, zum Anhalten des Ausstoßens von Fluid an der Ausstoßvorrichtung (210) und zum Zurückführen jedes Verteilers der Vielzahl n-1 von Verteilern (100) in seinen Anfangszustand.

## Claims

1. System (200) for distributing a fluid in a vehicle, comprising:
- a plurality n of independent devices (210) for ejecting the fluid;
- a plurality n-1 of distributors (100), each having an inlet (1), a first outlet (2) and a second outlet (3) and being configured to establish a fluid connection either between the inlet (1) and the first outlet (2) or between the inlet (1) and the second outlet (3) in an initial state and in a switched state, respectively;
the inlet of a first distributor (100a) being connected to a pump (310) which is connected to a fluid reservoir (300); each independent ejection device (210) being connected to an outlet (2, 3) of a distributor (100); at least one outlet (2, 3) of a distributor (100) being connected to the inlet (1) of a subsequent distributor (100).

2. System (200) for distributing a fluid according to the preceding claim, comprising:
- a main fluid supply pipe (221) for connecting the inlet of the first distributor (100a) to the pump (310),
- an outlet pipe (223) for connecting each ejection device (210) to an outlet (2, 3) of a distributor (100),
- at least one intermediate pipe (222) for connecting at least one outlet (2, 3) of a distributor (100) and the inlet (1) of a subsequent distributor (100).

3. System (200) for distributing a fluid according to either of the preceding claims, wherein each distributor (100) comprises an electrical connector (5) for controlling its switched state and is configured to automatically switch from its switched state to its initial state, without electrical control, when the fluid pressure in the distribution system (200) is lower than a predetermined pressure.

4. System (200) for distributing a fluid according to the preceding claim, wherein each distributor (100) comprises an electromagnetic actuator (4) which is coupled to the electrical connector (5) and comprises a movable piston (41) which is capable of moving between an initial position and a switched position corresponding to the initial state and to the switched state of the distributor (100), respectively.

5. System (200) for distributing a fluid according to the preceding claim, wherein each distributor (100) comprises a return element (42) for returning the piston to its initial position when the actuator (4) is inactive and when the pressure of the fluid in the distribution system (200) is lower than the predetermined pressure.

6. System (200) for distributing a fluid according to either of the two preceding claims, wherein each distributor (100) comprises:
- a first fluid communication channel (21) between the inlet (1) and the first outlet (2) and a second fluid communication channel (31) between the inlet (1) and the second outlet (3);
- a first deformable diaphragm (22), one face (22a) of which is in contact with the first end of the piston (41) and the other face (22b) of which is intended to be in contact with the fluid and which is configured to close off the first channel (21) when the piston (41) is in its switched position, the first channel (21) being open when the piston (41) is in its initial position;
- a second deformable diaphragm (32), one face (32a) of which is in contact with the second end of the piston (41) and the other face (32b) of which is intended to be in contact with the fluid and which is configured to close off the second channel (31) when the piston (41) is in its initial position, the second channel (31) being open when the piston (41) is in its switched position.

7. System (200) for distributing a fluid according to the preceding claim, wherein the fluid-contact surface of the first diaphragm (22) is smaller than that of the second diaphragm (32) when the piston (41) is in the switched position and the fluid-contact surface of the second diaphragm (32) is smaller than that of the first diaphragm (22) when the piston (41) is in the initial position.

8. System (200) for distributing a fluid according to either of the two preceding claims, wherein the first diaphragm (21) and the second diaphragm (32) form a seal between a central body (6) of the distributor (100) and the first fluid communication channel (21) and between the central body (6) and the second fluid communication channel (31), respectively.

9. System (200) for distributing a fluid according to the preceding claim, wherein each distributor (100) comprises:
- the central body (6) in which the electrical connector (5) and the actuator (4) are arranged,
- a first body (7) comprising the first outlet (2) and all or part of the first fluid communication channel (21),
- a second body (8) comprising the second outlet (3) and all or part of the second fluid communication channel (31),
the inlet (1) of the distributor (100) being included in the first body (7), in the second body (8) or in the central body (6).

10. System (200) for distributing a fluid according to the preceding claim, wherein the first body (7) and the second body (8) are identical.

11. System (200) for distributing a fluid according to either of the two preceding claims, wherein the central body (6), the first body (7) and the second body (8) are made of molded plastics material.

12. System (200) for distributing a fluid according to any of the preceding claims, wherein the inlet (1) and the two outlets (2, 3) of each distributor (100) each have a male-type or female-type fluid quick-connect end piece.

13. System (200) for distributing a fluid according to any of claims 3 to 12, wherein the predetermined pressure is between 1 bar and 15 bar.

14. System (200) for distributing a fluid according to any of the preceding claims, wherein the ejection devices (210) are jet nozzles, telescopic nozzles or oscillating nozzles.

15. Method for ejecting a fluid at an ejection device (210) by using the fluid distribution system (200) in accordance with any of claims 2 to 14, comprising the following steps:
- activating an actuator (4) of at least one distributor (100) to set said distributor into its switched state so as to put the main fluid supply pipe (221) and the ejection device (210) in fluid communication;
- activating the pump (310) to pressurize the fluid in the system (200) and eject it through said ejection device (210);
- deactivating the actuator (4), while the ejection of the fluid takes place.

16. Method for ejecting a fluid at an ejection device (210) according to the preceding claim, further comprising the following step:
- stopping the pump (310) so that the pressure of the fluid in the distribution system (200) is lower than a predetermined pressure in order to stop the ejection of fluid at the ejection device (210) and to return each distributor of the plurality n-1 of distributors (100) to its initial state.
